# EUROPEAN PATENT SPECIFICATION

(11) **EP 1 697 893 B1**
(45) Date of publication and mention of the grant of the patent: **04.07.2012**
(21) Application number: 04803255.1
(22) Date of filing: 24.11.2004
(51) Int. Cl.: G05B 23/02, G06Q 10/06

(54) **INDUSTRIAL CONTROL SYSTEM AND DATA PROCESSING METHOD THEREFORE**
INDUSTRIELLES STEUERSYSTEM UND DATENVERARBEITUNGSVERFAHREN DAFÜR
SYSTEME DE COMMANDE INDUSTRIELLE ET PROCEDE DE TRAITEMENT DE DONNEES ASSOCIE

(30) Priority: 09.12.2003 EP 03028318
(43) Date of publication of application: 06.09.2006
(73) Proprietor: SAP AG, 69190 Walldorf (DE)
(72) Inventor: CLEMENS, Achim, 67346 Speyer (DE); KÜHNER, Ralf, 67697 Kaiserslautern (DE); GAISER, Tim, 74889 Sinsheim (DE); METZ, Manfred, 76139 Karlsruhe (DE); KLEIN, Markus, 67227 Frankenthal (DE)
(74) Representative: Richardt Patentanwälte GbR
(86) International application number: PCT/EP2004/013334
(87) International publication number: WO 2005/059667

(56) References cited:
- EP-A- 1 204 042
- EP-A- 1 385 070
- FR-A- 2 765 364
- FR-A- 2 814 252
- US-A- 5 301 120
- US-A- 5 461 570
- US-A- 5 964 656
- US-A1- 2003 158 795
- US-B1- 6 321 272

## Description

### Field of the invention

The present invention relates to the field of industrial control systems, and more particularly to data processing methods in industrial control systems.

### Background and prior art

Sophisticated industrial processes, such as oil refining, automobile assembly or power generation, require the cooperative execution of numerous interdependent tasks by many different pieces of equipment. The enormous complexity of ensuring proper task sequencing and management, which requires not only procedural logic but constant monitoring of equipment states to organize and distribute operations and detect malfunction, has resulted in the widespread adoption of programmable controllers.

These controllers operate elaborate industrial equipment in accordance with a stored control program. When executed, the program causes the controller to examine the state of the controlled machinery by evaluating signals from one or more sensing devices (e.g., temperature or pressure sensors), and to operate the machinery (e.g., by energizing or de-energizing operative components) based on a procedural framework, the sensor signals and, if necessary, more complex processing. The "inputs" to a particular controller can extend beyond the sensed state of the equipment the controller directly operates to include, for example, its environment, the state of related machinery or the state of its controllers.

Control requirements become even more complex when different aspects of the same overall process are assigned to remotely situated equipment. Such configurations often require reliable, high-bandwidth, and real-time serial communication links to provide the necessary interconnection and handle data transfer among controllers and the sensors relevant to their operation.

Ordinarily, process operation is monitored, at least intermittently, by supervisory personnel by means of one or more central management stations. Each station samples the status of controllers (and their associated sensors) selected by the operator and presents the data in some meaningful format. The management station may or may not be located on the same site as the monitored equipment; frequently, one central station has access to multiple sites (whether or not these perform related processes). Accordingly, communication linkage can be vital even in traditional industrial environments where process equipment is physically proximate, since at least some supervisory personnel may not be.

To facilitate the necessary communication, the controller processors and related computers (such as monitoring stations) are arranged as a computer network. A network, basically, is a collection of interconnected computers that use some consistent protocol to communicate with one another. Typically, the network is organized such that any computer may communicate with any other network computer. The communication protocol provides a mechanism by which messages can be decomposed and routed to a destination computer identified by some form of address.

Typically the various components of such an industrial control system are interconnected by means of a field bus having real-time capability, such as PROFIBUS or real-time Ethernet. Such bus systems have real-time capability in order to guarantee maximum latency times for transmission of control data between the various components of the industrial control system.

US Pat. Nos. 5,805,442 6,484,061B2; 5,461,570; 5,301,120; 6,321,272B1 and EP1204042A1; EP138507082; FR2765364; FR2814252 show examples for such prior art industrial control systems.

### Summary of the invention

The invention provides for a data processing method for controlling a manufacturing process, a computer program product, and a computer system for controlling a manufacturing process in the independent claims. Embodiments are given in the dependent claims.

The present invention provides for a data processing method for use in an industrial control system. A computer system of the industrial control system receives control data from various automation components, such as controllers, sensors, actuators and/or data entry terminals. The automation components and the computer system are coupled by means of a network, such as a real-time field bus.

The computer system has a database for storing of the control data. The database is queried in order to determine a sub-set of the control data. Control data of the sub-set is aggregated and transmitted to an external computer system over another network for offline processing of the aggregated control data.

Preferably the database query is performed when the load of the real-time network is low. A database query can be triggered by a component that monitors network load. Alternatively the database query is triggered at predefined points of time. This has the advantage that the real-time capability of the computer system is not negatively influenced by query and the transmission of the control data to the external computer system.

Further this has the advantage that the amount of data that is transmitted from the computer system of the industrial control system to the external computer system is reduced. As a further consequence the storage and data processing capacity requirements for the external computer system are also reduced as the external computer system does not receive the raw control data but aggregated control data for further offline processing.

In accordance with a preferred embodiment of the invention the control data is expressive of a quantity of a valuation unit. A valuation unit can be any entity that is used or occurs in the production process and that has a financial value, such as a product unit or a work unit. Preferably each valuation unit is identified by means of a unique identifier. The aggregation of the control data is performed based on pre-defined similarity criteria of the valuation units. The similarity criteria determine the level of granularity that is required for the later off-line processing by the external computer system.

For example, various types of household appliances are produced in a factory, such as refrigerators of various sizes. In this example the level of granularity that is of interest for the off-line processing may be the size of the refrigerators, whereas the colours of the refrigerators are of no interest. Hence the amount of refrigerators of a given size that are reported from the automation components are aggregated and transmitted to the external computer system.

In accordance with a preferred embodiment of the invention the unique identifiers that are used to designate the valuation units have a hierarchical structure. In this instance a pre-defined portion of the unique identifiers is used to define clusters of the valuation units for the purpose of aggregating the respective control data. For example all valuation units that have an identical sequence of leading bit positions of their unique identifiers are considered to be similar for the purpose of aggregating the respective control data.

In accordance with a further preferred embodiment of the invention the off-line computer system performs a financial valuation of the aggregated control data. In other words, the off-line computer system calculates a monetary value for similar valuation units that have been reported from the industrial control system. These monetary values are entered as postings in a ledger, such as for the purpose of book keeping, financial evaluation and/or financial reporting.

In accordance with a further preferred embodiment of the invention, the aggregated control data is transmitted from the industrial control system to the external computer system by means of a document. Preferably SAP's exchange infrastructure (XI) is used for this purpose. Alternatively, other types of self-descriptive documents can be used, such as mark-up language documents, e.g. hypertext mark up language (HTML) or extended mark up language (XML) documents.

### Brief description of the drawings

In the following preferred embodiments of the invention will be described in greater detail by way of example only with reference to the drawings in which:
- Figure 1: is a block diagram of a preferred embodiment of an industrial control system of the invention,
- Figure 2: is a flow diagram of a preferred embodiment of a data processing method of the invention,
- Figure 3: is a block diagram illustrating usage of the exchange infrastructure (XI) for transmission of aggregated control data,
- Figure 4: is a block diagram of an industrial control system,
- Figure 5: is a flow diagram of a data processing method,
- Figure 6: is a window for a user's selection of an aggregation level.

### Detailed description

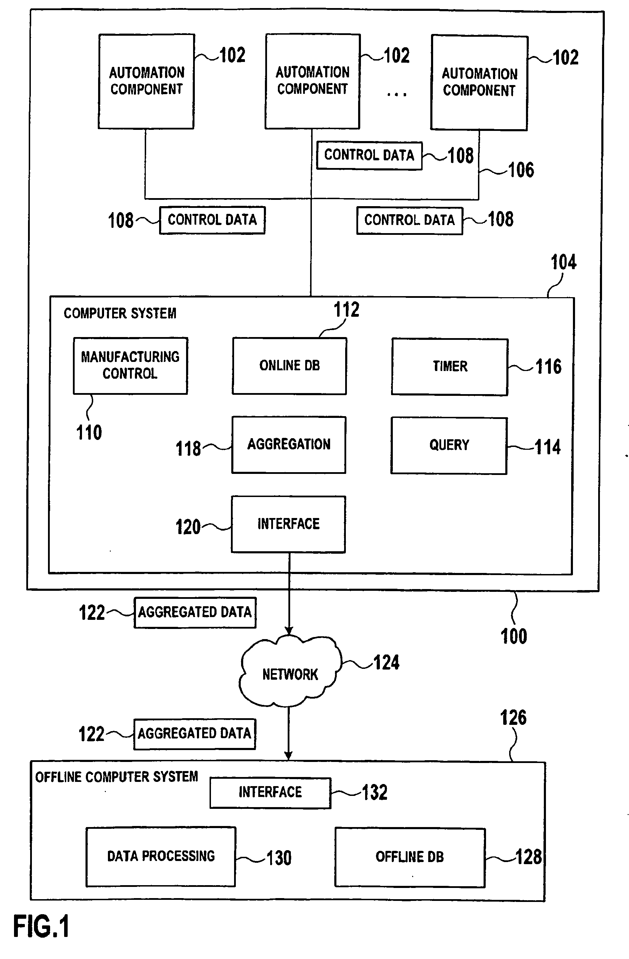

Figure 1 shows industrial control system 100 that controls a manufacturing process. Industrial control system 100 has various automation components 102, such as sensors, actuators, intelligent drives, controllers, etc. Further industrial control system 100 has computer system 104 that provides a control functionality.

Network 106 interconnects the automation components 102 and computer system 104. Computer system 104 receives various control data 108 from automation components 102. Control data 108 may include measurement values, such as speed, temperature, humidity, or logical information regarding the state of an automation component 102. Further control data 108 includes messages that indicate quantities of valuation units.

The term "valuation unit" may include a product unit or a product sub-unit, a component or other kind of material that is used for the ongoing production as well as a work unit, such as manufacturing service provided by a human and/or a machine. Each type of valuation unit is identified by a unique identifier that is transmitted as part of the control data 108 to computer system 104.

Computer system 104 has program component 110 for providing a manufacturing control functionality on the basis of the control data 108 that is received by computer system 104. Further computer system 104 has online database 112 for storage of at least some of the control data 108 that contains data concerning the valuation units.

Program component 114 serves to perform a predefined database query in order to determine a sub-set of the control data that is stored in on-line database 112. Such a database query is triggered by program component 116. Program component 116 can be implemented as a timer that has a pre-defined timer value. When the timer expires program component 116 triggers program component 114 to execute the database query. Alternatively program component 116 monitors the present load situation of network 106 and/or the present data processing load of computer system 104. When the actual load is below a threshold value this indicates that computer system 104 has sufficient unused capacity in order to perform the database query without negatively impacting the real-time capability of program component 110.

Program component 118 serves to aggregate control data that has been extracted from online database 112 as a result of the query that has been performed by program component 114. For example program component 118 aggregates control data of similar valuation units.

Further computer system 104 has interface 120 for transmitting of aggregated data 122 via network 124 to off-line computer system 126.

It is important to note that network 106 of industrial control system 100 as well as program component 110 and online database 112 have real-time capabilities. In other words maximum latency times for transmitting, storing, processing and responding to control data 108 that is received by computer system 104 via network 106 need to be guaranteed under all circumstances in order to ensure proper functioning of industrial control system 100.

In contrast network 124 and computer system 126 do not need to have such real-time capabilities as computer system 126 is not directly involved in the ongoing process control. Computer system 126 has off-line database 128 for storage of aggregated data 122. This can have the purpose of documentation of the ongoing process, such as for the purpose of product liability documentation, and/or other reporting purposes.

In operation, control data 108 is reported from the automation components 102 to computer system 104. For the purpose of explanation it is assumed that refrigerators of various colours and sizes are produced in the production process, e.g. red, blue, and white refrigerators having capacities of 150 litres, 170 litres and 230 litres. For the purpose of valuation only the number of refrigerators of a certain size irrespective of colour is of interest.

Program component 114 has corresponding predefined database queries for determining control data relating to refrigerators having 150 litres, 170 litres and 230 litres capacity respectively, irrespective of colour.

In the example considered here the production of the refrigerators is interrupted during the night. Program component 116 has a timer that is programmed to trigger program component 114 one hour after the stop of the production. Program component 114 executes its queries in order to extract a sub-set of control data relating to refrigerators that have been produced during the day having 150 litres capacity and separate sub-sets of the control data relating to such refrigerators having 170 litres and 230 litres capacity, respectively.

Program component 118 aggregates control data of the respective sub-sets. This results in aggregated control data indicating the quantity of 150 litres refrigerators, 170 litre refrigerators and 230 litre refrigerators that have been produced during the day. These aggregated data are transmitted from interface 120 via network 124 to offline computer system 126.

Data processing component 130 valuates the aggregated data 122. For example data processing component 130 determines the accumulated values of 150 litres, 170 litres, and 230 litre refrigerators that have been produced during the day on the basis of aggregated data 122 and predefined refrigerator costs that do not depend on the refrigerators colour. The resulting values are posted in off-line database 128 that has the role of an electronic ledger.

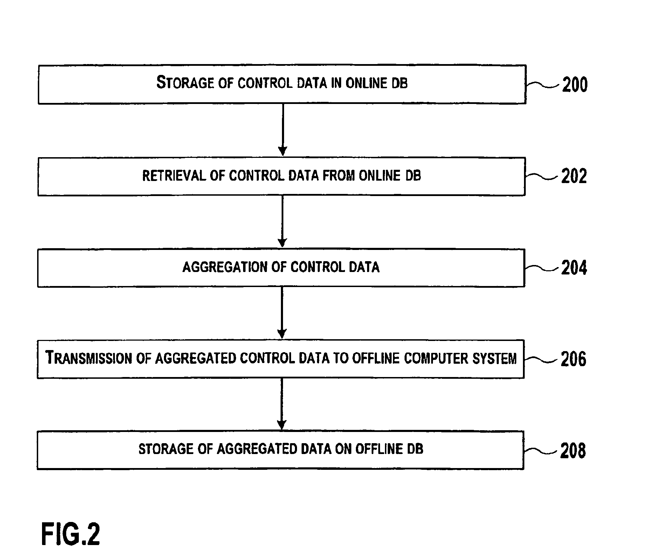

Figure 2 shows a corresponding flow diagram. In step 200 control data received from the automation components of the industrial control system is stored in the on-line database during the ongoing production. When the network load of the real-time network of the industrial control system is low or zero, such as when the production process is interrupted during the night, control data that is of interest for reporting to external computer system is retrieved from the on-line database (step 202). This data is aggregated in step 204 and then transmitted to the off-line computer system in step 206. The aggregated data is stored on a database of the offline computer system in step 208.

This method has the advantage that the computer system of the industrial control system is not burdened with the reporting of data to the external computer system or only to an extend which does not jeopardise the real-time capability of the industrial control systems computer system. Further, this limits the amount of data that needs to be transmitted over network 124 as only aggregated data having a level of granularity that corresponds to the needs of the external computer system is transmitted. This has the further beneficial consequence that the loading of the external computer system is also minimised in terms of both storage and data processing requirements.

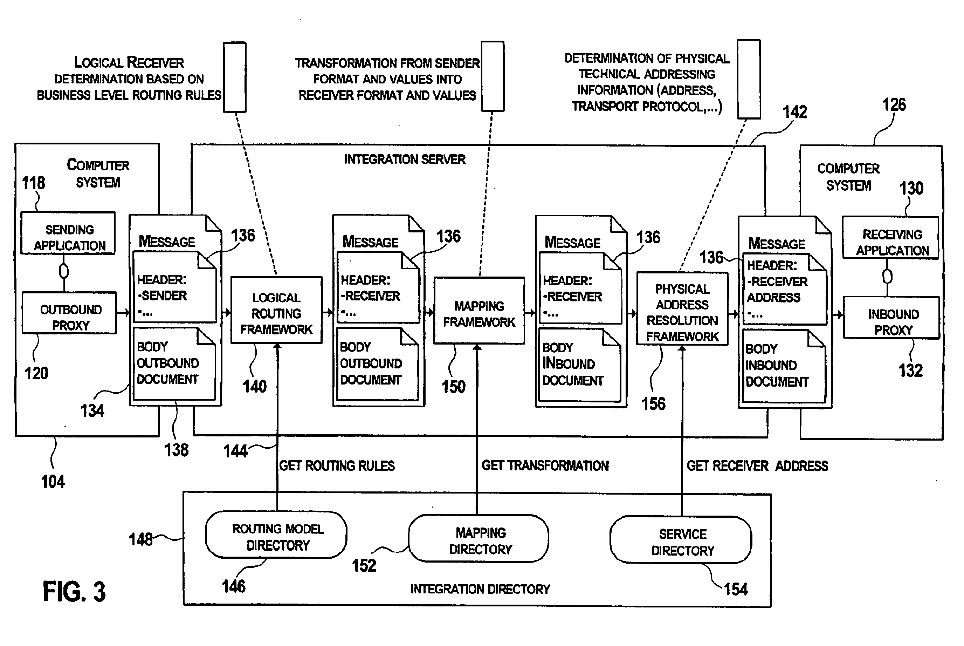

Figure 3 illustrates the message flow from computer system 104 to offline computer system 126 using SAP's exchange infrastructure (XI). In the XI framework computer system 104 takes the role of the sending component. Program component 118 takes the role of a sending application whereas interface 120 is realised by means of an outbound proxy.

Likewise computer system 126 takes the role of a receiving component system; data processing component 130 takes the role of a receiving application and interface 132 is realised as an inbound proxy. Initially, program component 118 calls the outbound proxy of interface 120. This causes the generation of a message 134 as a XML document.

The message 134 includes a header 136 that contains information about the sender, and the outbound interface and a body 138 that contains the outbound document, i.e. aggregated data 122. Using a routing framework 140, integration server 142 then determines the receiver and the inbound interface according to the routing rules 144 of a routing model directly 146 contained within an integration directory 148.

After this determination the header 136 of the message 134 is modified to contain the receiver and the inbound interface. Then, using a mapping framework 150 that communicates with a mapping directory 152, the message 134 is transformed from the senders format and values into the receivers format and values. After this transformation, the body 138 of the message 134 contains the document converted to the inbound format, i.e. the structure that the receiver understands. Finally, the physical address of the receiver is determined using the data of the system landscape directory and by communicating with a service directory 154. The determination of the technical addressing information is performed by physical address resolution framework 156 on this basis. That information is added to the header 136 of the message 134 and the message is sent to the receiving computer system 126.

In essence integration server 142 and integration directory 148 provide a transport layer for transmitting of message 134 from the program component 118, i.e. the sending application, to the data processing component 130, i.e. the receiving application.

The usage of XI has the advantage that various receiving computer systems can be coupled to computer system 104 without a need to change computer system 104 and its data formats. This is especially important to maintain computer system's 104 real-time capabilities irrespective of the needs of the external receiving computer system.

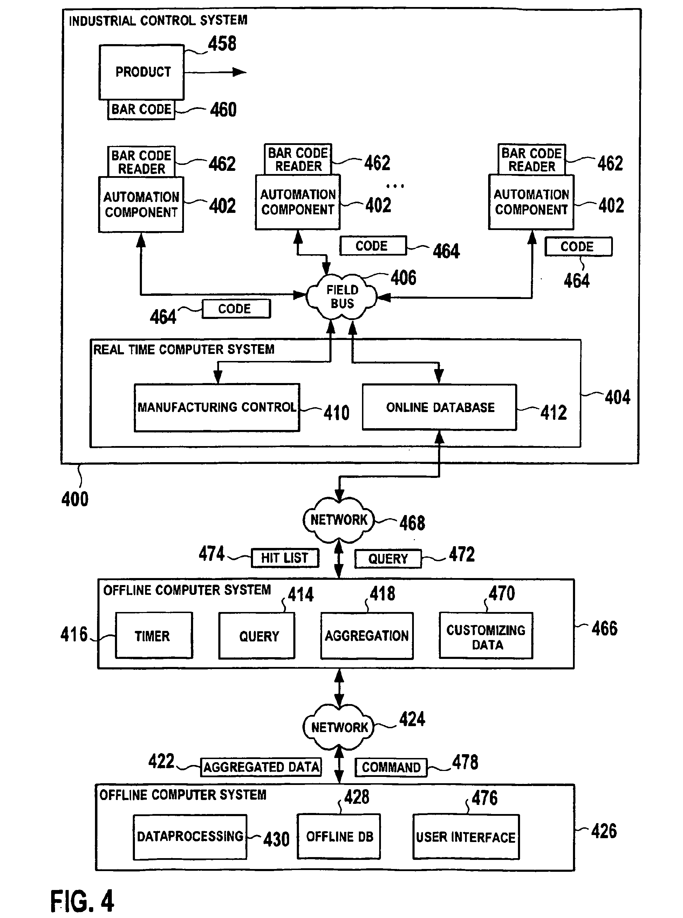

Figure 4 shows industrial control system 400 that controls a manufacturing process for the mass production of certain kinds of products, such as a product 458 which is shown in figure 4 by way of an example. The product 458 has an assigned identification code for identification of the product 458 within industrial control system 400 and / or for global identification. The product 458 carries the identification code as a bar code label 460, as a radio frequency identification (RFID) tag or by other machine readable means.

The industrial control system 400 has various automation components 402 which control machines for the production of the product 458. At least some of the automation components 402 have readers 462, such as bar code readers or RFID readers, for reading the identification code from the product 458 when it travels along the manufacturing line.

A field bus 406 connects the automation components 402 to a computer system 404. The computer system 404 has real time or at least near real time capabilities. It includes a program component 410 for providing a manufacturing control functionality, such as the provision of various proportional (P), proportional integral (PI) and / or proportional integral differential (PID) controllers for the control of the automation components 402.

Further, the computer system 404 has online database 412 for storage of manufacturing events. Manufacturing events are reported from the automation components 402 via the field bus 406 and are stored in the online database 412 for later reference. For example, when the product 458 reaches one of the automation components 402 as it travels along the manufacturing line the automation component 402 reads the bar code label 406 of the product 458 and performs a manufacturing step on the product 458.

The automation component 402 generates a message 464 that contains the identification code of the product 458 and a code that describes the manufacturing event, e.g. the manufacturing step that has been performed on the product 458. The message 464 is transmitted via the field bus 406 and is received by the computer system 404. The computer system 404 stores the content of the message 464 in online database 412.

The computer system 466 is coupled to the online database 412 via a network, 468. The computer system 466 can be an offline computer system that does not have real time or near real time capabilities. The computer system 466 serves for extraction and aggregation of data from the online database 412.

Here, the computer system 466 has storage 470 for storage of customising data that specifies the timing of the extractions to be performed and I or the aggregation level. The program component 414 of the computer system 466 serves to perform a pre-defined database query of online database 412 in order to determine a sub-set of the data that is of interest for the aggregation. Such a database query can be triggered by the program component 416 that implements a timer. The response that is returned from the online database 412 is processed by the program component 418 that aggregates the data.

For example, the industrial control system 400 serves for the manufacturing control of various manufacturing lines for the production of various kinds of products, such as washing machines, dish washers and other household applicances products. For example, the customising data stored in the storage 470 can specify 'washing machines' or special types of washing machines as the aggregation level and 'daily' for the timing of the data extraction and aggregation.

Hence, the program component 416 triggers the program component 414 daily e.g. after the final shift of a working day, in accordance with the customising data. In response the program component 414 generates a query 472 which is sent via the network 468 to the online database 412.

The online database 412 responds with a hit list 474 that contains the manufacturing event data that matches the query 472. In the example considered here the query 472 contains a search string that specifies 'washing machines' or special kinds of washing machines. The hit list 474 contains the data stored in the online database that concerns 'washing machines'. Preferably, the product type is encoded in the identification codes in order to facilitate the generation of the query 472 and the execution of the query by the online database 412.

The data contained in the hit list 474 is processed by the program component 418 in order to perform the aggregation. In the example considered here the aggregation is performed by counting the number of 'washing machines' or special kinds of washing machines that have been produced during the working day.

A computer system 426 is coupled to the computer system 466 via a network 424. The network 424 can be identical to network 468 or it can be another network, such as a company's intranet or the Internet.

As computer system 466 the computer system 426 does not need to have real time or near real time capabilities.

The computer system 426 has an offline database 428 for storage of aggregated data 422 that is generated by the program component 418 and transmitted via the network 424 to the computer system 426. Further, the computer system 426 has a data processing component 430 for analysis of the aggregated data 422 stored in the offline database 428.

The computer system 426 has a user interface 476 for a user's selection of an aggregation level and / or of the timing of the data extraction and aggregation. This user selection can be an alternative to the customising data or it can complement the customising data stored in the offline computer system 466.

In response to a user's entry of a selection of the aggregation level and / or data extraction and aggregation timing, a command 478 is generated by the computer system 426 and sent to the computer system 466 via the network 424. The data contained in the command 478 is stored in the storage 470 as customising data in order to control the program components 414, 416 and 418 as described above.

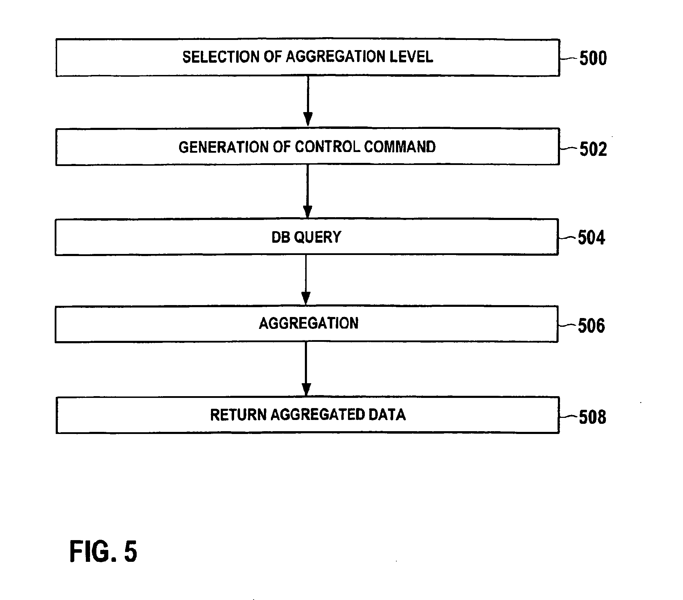

Figure 5 shows a corresponding flow chart. In step 500 an aggregation level and / or data extraction and aggregation timing is selected. This can be done by entering corresponding customising data into the computer system 466 or by making a corresponding entry by means of the user interface 476 of the computer system 426 (cf. figure 4). If the entry of the selection is performed by means of the user interface 476 a control command is generated in step 502 which is transmitted to the computer system that performs the data extraction and aggregation (cf. command 478 of figure 4).

In step 504 the online database that contains the manufacturing data is queried in accordance with the selected aggregation level (step 504). In step 506 the data that is returned by the online database is aggregated in accordance with the selected aggregation level and in step 508 the aggregated data is returned for storage in an offline database and / or for viewing by a user and / or for further data analysis.

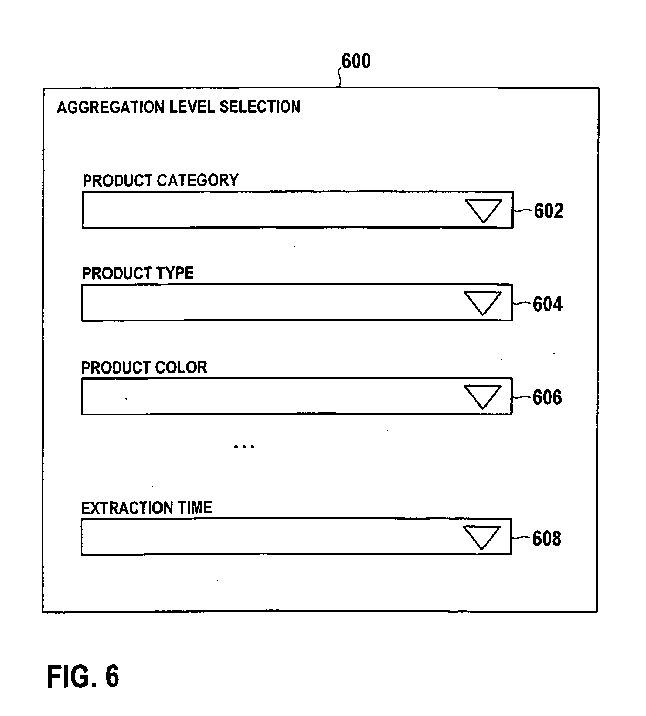

Figure 6 shows an example of a window 600 that is generated by the user interface 476 for a user's entry of a selection of the aggregation level and / or data extraction and aggregation timing. The window 600 has a number of pull-down menus 602, 604, 606, ... in order to facilitate a user's entry of a selection of an aggregation level.

For example, the pull-down menu contains all product categories that are produced in the manufacturing lines controlled by the industrial control system. Product categories may include various categories of household appliances, such as washing machines, dish washers, ...

Pull-down menu 604 serves for specification of a product type. For example, the user may first select the product category using the pull-down menu 602. In the next step the user can select the product type by means of the pull-down menu 604. The pull-down menu 604 contains all product types of the selected product category. In addition or alternatively the user can select the product colour using the pull-down menu 606. The pull-down menu 606 shows all colours and their colour codes that are used in the manufacturing.

Preferably the pull-down menus 602, 604, 606, ... correspond to the structure of the product identification codes used for identification of the products. For example, each identification code has a code portion that encodes the product category, a code portion that encodes the product type and a code portion that carries the colour code. This facilitates generation of the query (cf. query 472 of figure 4), especially if the code portions are used as database keys. The query can contain a combination of the code portions that are selected using the window 600.

In addition, the window 600 can contain a pull-down menu 608 for selection of a data extraction time. For example, the pull-down menu 608 may contain certain points of time, time intervals or events for a user's selection as a trigger point for performance of the data extraction and aggregation.

### List of Reference Numerals

- 100: industrial control system
- 102: automation components
- 104: computer system
- 106: network
- 108: control data
- 110: program component
- 112: online database
- 114: program component
- 116: program component
- 118: program component
- 120: interface
- 122: aggregated data
- 124: network
- 126: computer system
- 128: off-line database
- 130: data processing component
- 132: interface
- 134: message
- 136: header
- 138: body
- 140: routing framework
- 142: integration server
- 144: routing rules
- 146: routing module directory
- 148: integrator directory
- 150: mapping framework
- 152: mapping directory
- 154: service directory
- 156: resolution framework
- 400: industrial control system
- 402: automation component
- 404: computer system
- 406: field bus
- 412: online database
- 414: program component
- 416: program component
- 418: program component
- 422: aggregated data
- 424: network
- 426: computer system
- 428: off-line database
- 430: data processing component
- 462: reader
- 464: message
- 466: computer system
- 468: network
- 470: storage
- 472: query
- 474: hit list
- 476: user interface
- 478: command
- 458: products
- 460: bar code label
- 600: window
- 602: pull-down menu
- 604: pull-down menu
- 606: pull-down menu
- 608: pull-down menu

## Claims

1. A data processing method for controlling a manufacturing process comprising:
- receiving of control data (108) from automation components (102) of an industrial control system (100) by a first computer system (104), the first computer system being coupled to the automation components by means of a first real-time network (106),
- storing of at least some of the control data in a first database (112) by the first computer system,
- performing a database query of the first database for determination of a sub-set of the control data by the first computer system,
- aggregation of the control data of the sub-set by the first computer system,
- transmission of the aggregated control data (122) to a second computer system (126) over a second network (124) for offline processing of the aggregated control data,
**characterized by**:
- monitoring a present load of the first real-time network and a present data processing load of the first computer system,
- initiating the database query when the present load of the first real-time network and the present data processing load of the first computer system is below a predetermined threshold value.

2. The data processing method of claim 1, wherein the control data has a unique identifier of a valuation unit.

3. The method of claim 2, wherein the valuation unit is a product unit or a work unit.

4. The method of claim 1, 2 or 3, wherein the control data comprises data expressive of a quantity of a valuation unit.

5. The method of any one of any of the preceding claims 1 to 4, wherein the aggregation is performed by aggregation of quantities of similar valuation units.

6. The method of claim 5, wherein similar valuation units are identified based on pre-defined similarity criteria.

7. The method of any one of the preceding claims 1 to 6, wherein the database query is performed periodically.

8. The method of any one of the preceding claims 1 to 7, wherein a database query is performed when a pre-programmed timer (116) expires.

9. The method of any one of the preceding claims 1 to 8, wherein the first network is a field bus.

10. The method of any one of the preceding claims 1 to 9, wherein the second network is an internet protocol (IP)- type network.

11. The method of any one of the preceding claims 1 to 10, further comprising generating a document (122) containing the aggregated control data, wherein the transmission of the control data is performed by transmitting of the document.

12. The method of claim 11, wherein the document is an exchange infrastructure (XI) type document.

13. The method of claim 11, wherein the document is a mark-up language document, such as a hyper text mark-up language (HTML) or extended mark-up language (XML) document.

14. The method of any one of the preceding claims 1 to 13, wherein the second computer is coupled to a second database (128) for storage of the aggregated control data.

15. The method of claim 14, further comprising performing a data processing step by the second computer system for financial valuation of the aggregated control data, wherein the second database is a ledger.

16. A computer program product comprising instructions adapted to perform the data processing method according to claim 1.

17. The computer program product of claim 16, wherein the aggregation is performed by aggregation of quantities of similar valuation units.

18. A computer system (104) for controlling a manufacturing process, the computer system comprising:
- means for receiving of control data (108) from automation components (108) via a first real-time network (106),
- a first database (112) for storing at least some of the control data,
- means (114) for performing a database query for determination of a sub-set of the control data stored in the first database,
- means (118) for aggregation of control data of the sub-set,
- means (120) for transmission of the aggregate control data over a second network (124) to an offline computer system for offline processing of the aggregated control data, and
**characterized by**:
- means (116) for monitoring the present load situation of the first real-time network and the present data processing load of the computer system,
- means (116) for initiating the database query when the present load situation of the first real-time network and the present data processing load of the computer system is below a predetermined threshold value.

19. The computer system of claim 18, further comprising control means (110) having real-time capability.

20. The computer system of claim 18 or 19, the first network being a field bus.

## Patentansprüche

1. Ein Datenverarbeitungsverfahren zum Steuern eines Herstellungsprozesses, umfassend:
- Empfangen von Steuerdaten (108) von Automatisierungskomponenten (102) eines industriellen Steuersystems (100) durch ein erstes Computersystem (104), wobei das erste Computersystem an die Automatisierungskomponenten mittels eines ersten Echtzeit-Netzwerks (106) gekoppelt ist,
- Speichern von wenigstens einigen der Steuerdaten in einer ersten Datenbank (112) durch das erste Computersystem,
- Durchführen einer Datenbankabfrage der ersten Datenbank zur Bestimmung einer Teilmenge der Steuerdaten durch das erste Computersystem,
- Aggregation der Steuerdaten der Teilmenge durch das erste Computersystem,
- Übertragung der aggregierten Steuerdaten (122) an ein zweites Computersystem (126) über ein zweites Netzwerk (124) zum Offline-Verarbeitung der aggregierten Steuerdaten,
**gekennzeichnet durch**:
- Überwachung einer gegenwärtigen Belastung des ersten Echtzeit-Netzwerks und einer gegenwärtigen Datenverarbeitungslast des ersten Computersystems,
- Initiierung der Datenbankabfrage, wenn die gegenwärtige Last des ersten Echtzeit-Netzwerks und die gegenwärtige Datenverarbeitungslast des ersten Computersystems unter einem vorbestimmten Schwellenwert ist.

2. Das Datenverarbeitungsverfahren nach Anspruch 1, wobei die Steuerdaten eine eindeutige Kennung einer Bewertungseinheit beinhalten.

3. Das Verfahren nach Anspruch 2, wobei die Bewertungseinheit eine Produktionseinheit oder eine Arbeitseinheit ist.

4. Das Verfahren nach Anspruch 1, 2 oder 3, wobei die Steuerdaten Daten umfassen, die eine Quantität in einer Bewertungseinheit zum Ausdruck bringen.

5. Das Verfahren nach einem der vorhergehenden Ansprüche 1 bis 4, wobei die Aggregation durchgeführt wird, indem Quantitäten ähnlicher Bewertungseinheiten aggregiert werden.

6. Das Verfahren nach Anspruch 5, wobei ähnliche Bewertungseinheiten mittels vordefinierter Ähnlichkeitskriterien identifiziert werden.

7. Das Verfahren nach einem der vorhergehenden Ansprüche 1 bis 6, wobei die Datenbankabfrage periodisch durchgeführt wird.

8. Das Verfahren nach einem der vorhergehenden Ansprüche 1 bis 7, wobei eine Datenbankabfrage durchgeführt wird, wenn ein vorprogrammierter Zeitgeber (116) abläuft.

9. Das Verfahren nach einem der vorhergehenden Ansprüche 1 bis 8, wobei das erste Netzwerk ein Feldbus-Netzwerk ist.

10. Das Verfahren nach einem der vorhergehenden Ansprüche 1 bis 9, wobei das zweite Netzwerk ein Netzwerk des Internet-Protokoll (IP) - Typs ist.

11. Das Verfahren nach einem der vorhergehenden Ansprüche 1 bis 10, ferner umfassend eine Erzeugung eines Dokuments (122) welches die aggregierten Steuerdaten beinhaltet, wobei die Übertragung der Steuerdaten durch Übertragung des Dokuments durchgeführt wird.

12. Das Verfahren nach Anspruch 11, wobei das Dokument ein Dokument vom Typ Exchange Infrastruktur (XI) ist.

13. Das Verfahren nach Anspruch 11, wobei das Dokument ein Dokument einer Dokumentenbeschreibungssprache, wie zum Beispiel ein Hypertext Markup Language (HTML) Dokument oder ein Extended Markup Language (XML) Dokument ist.

14. Das Verfahren nach einem der vorhergehenden Ansprüche 1 bis 13, wobei der zweite Computer mit einer zweiten Datenbank (128) gekoppelt ist zur Speicherung der aggregierten Steuerdaten.

15. Das Verfahren nach Anspruch 14, ferner umfassend eine Durchführen eines Datenverarbeitungsschritts durch den zweiten Computer für eine finanzielle Bewertung der aggregierten Steuerdaten, wobei die zweite Datenbank eine Buchungsdatenbank ist.

16. Ein Computerprogrammprodukt mit Anweisungen welche geeignet sind, das Datenverarbeitungsverfahren nach Anspruch 1 auszuführen.

17. Das Computerprogrammprodukt nach Anspruch 16, wobei die Aggregation durch Aggregation von Quantitäten ähnlicher Bewertungseinheiten durchgeführt wird.

18. Ein Computersystem (104) zum Steuern eines Herstellungsprozesses, wobei das Computersystem umfasst:
- Mittel zum Empfangen von Steuerdaten (108) von Automatisierungskomponenten (108) über ein erstes Echtzeit-Netzwerk (106),
- eine erste Datenbank (112) zum Speichern zumindest einiger der Steuerdaten,
- Mittel (114) zur Durchführung einer Datenbankabfrage zum Bestimmen einer Teilmenge der in der ersten Datenbank gespeicherten Steuerdaten,
- Mittel (118) für die Aggregation von Steuerdaten der Teilmenge,
- Mittel (120) zur Übertragung der aggregierten Steuerdaten über ein zweites Netzwerk (124) an ein Offline-Computersystem zur Offline-Verarbeitung der aggregierten Steuerdaten, und
**gekennzeichnet durch**:
- Mittel (116) zum Überwachen der gegenwärtigen Last des ersten Echtzeit-Netzwerks und der gegenwärtigen Datenverarbeitungslast des Computersystems,
- Mittel (116) zur Initialisierung der Datenbankabfrage, wenn die gegenwärtige Last des ersten Echtzeit-Netzwerks und die gegenwärtige Datenverarbeitungslast des Computersystems unter einem vorbestimmten Schwellenwert liegt.

19. Das Computersystem nach Anspruch 18, ferner mit einer Steuereinrichtung (110) mit Echtzeitfähigkeit.

20. Das Computersystem nach Anspruch 18 oder 19, wobei das erste Netzwerk ein Feldbus-Netzwerk ist.

## Revendications

1. Procédé de traitement de données pour commander un processus de fabrication comprenant :
- recevoir des données de commande (108) de composants d'automatisation (102) d'un système de contrôle industriel (100) par un premier système informatique (104), le premier système informatique étant couplé aux composants d'automatisation au moyen d'un premier réseau temps réel (106),
- stocker au moins certaines des données de commande dans une première base de données (112) par le premier système informatique,
- effectuer une requête de base de données de la première base de données pour la détermination d'un sous-ensemble des données de commande par le premier système informatique,
- l'agrégation des données de commande du sous-ensemble par le premier système informatique,
- la transmission des données de commande agrégées (122) à un second système informatique (126) via un second réseau (124) en vue d'un traitement hors ligne des données de commande agrégées,
**caractérisé par** :
- surveiller une charge présente du premier réseau temps réel et une charge de traitement de données présente du premier système informatique,
- lancer la requête de base de données lorsque la charge présente du premier réseau en temps réel et la charge de traitement de données présente du premier système informatique sont inférieures à une valeur seuil prédéterminée.

2. Procédé de traitement de données selon la revendication 1, dans lequel les données de commande ont un identifiant unique d'une unité d'évaluation.

3. Procédé selon la revendication 2, dans lequel l'unité d'évaluation est une unité de produit ou une unité de travail.

4. Procédé selon la revendication 1, 2 ou 3, dans lequel les données de commande comprennent des données exprimant une quantité d'une unité d'évaluation.

5. Procédé selon l'une quelconque des revendications 1 à 4 précédentes, dans lequel l'agrégation est effectuée par agrégation de quantités d'unités d'évaluation similaires.

6. Procédé selon la revendication 5, dans lequel des unités d'évaluation similaires sont identifiées sur la base de critères de similitude prédéfinis.

7. Procédé selon l'une quelconque des revendications 1 à 6 précédentes, dans lequel la requête de base de données est effectuée périodiquement.

8. Procédé selon l'une quelconque des revendications 1 à 7 précédentes, dans lequel une requête de base de données est effectuée lorsqu'un délai préprogrammé (116) expire.

9. Procédé selon l'une quelconque des revendications 1 à 8 précédentes, dans lequel le premier réseau est un bus de terrain.

10. Procédé selon l'une quelconque des revendications 1 à 9 précédentes, dans lequel le second réseau est un réseau de type protocole Internet (IP).

11. Procédé selon l'une quelconque des revendications 1 à 10 précédentes, comprenant en outre la génération d'un document (122) contenant les données de commande agrégées, dans lequel la transmission des données de commande est effectuée par transmission du document.

12. Procédé selon la revendication 11, dans lequel le document est un document de type infrastructure d'échange (XI).

13. Procédé selon la revendication 11, dans lequel le document est un document en langage de balisage, tel qu'un document en langage de balisage hypertexte (HTML) ou en langage de balisage étendu (XML).

14. Procédé selon l'une quelconque des revendications 1 à 13 précédentes, dans lequel le second système informatique est couplé à une seconde base de données (128) pour un stockage des données de commande agrégées.

15. Procédé selon la revendication 14, comprenant en outre la réalisation d'une étape de traitement de données par le second système informatique en vue d'une évaluation financière des données de commande agrégées, dans lequel la seconde base de données est un grand-livre.

16. Produit de programme informatique comprenant des instructions adaptées pour mettre en oeuvre le procédé de traitement de données selon la revendication 1.

17. Produit de programme informatique selon la revendication 16, dans lequel l'agrégation est effectuée par agrégation de quantités d'unités d'évaluation similaires.

18. Système informatique (104) pour commandeur un processus de fabrication, le système informatique comprenant :
- des moyens pour la réception de données de commande (108) de composants d'automatisation (108) via un premier réseau temps réel (106),
- une première base de données (112) pour stocker au moins certaines des données de commande,
- des moyens (114) pour effectuer une requête de base de données pour la détermination d'un sous-ensemble des données de commande stockées dans la première base de données,
- des moyens (118) pour l'agrégation de données de commande du sous-ensemble,
- des moyens (120) pour la transmission des données de commande agrégées via un second réseau (124) à un système informatique hors ligne en vue d'un traitement hors ligne des données de commande agrégées, et
**caractérisé par** :
- des moyens (116) pour surveiller la situation de charge présente du premier réseau temps réel et la charge de traitement de données présente du système informatique,
- des moyens (116) pour déclencher l'requête de base de données lorsque la situation de charge présente du premier réseau temps réel et la charge de traitement de données présente du système informatique sont inférieures à une valeur seuil prédéterminée.

19. Système informatique selon la revendication 18, comprenant en outre des moyens de commande (110) ayant une fonctionnalité temps réel.

20. Système informatique selon la revendication 18 ou 19, le premier réseau étant un bus de terrain.
